# DEMANDE DE BREVET EUROPEEN

(11) **EP 0 823 218 A1**
(43) Date de publication de la demande: **11.02.1998**
(21) Numéro de dépôt: 96401765.1
(22) Date de dépôt: 09.08.1996
(51) Int. Cl.: A23L 1/325, A23P 1/12

(54) **Procédé de préparation de succedanes de poissons jeunes et extrudeuse decoupeuse pour mettre en forme de tels produits**

(71) Demandeur: Chilard, Jean-Claude, 77660 Saint-Jean-les-Deux-Jumeaux (FR)
(72) Inventeur: Chillard, Jean-Claude, F-77660-Saint Jean les deux Jumeaux (FR)
(74) Mandataire: Desaix, Anne

(57) **Abrégé**

L 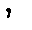 invention concerne un procédé et une extrudeuse pour réaliser des éléments de forme allongée semblables à des alevins, à partir de pâtes à base de surimi et/ou de chair de poisson, amenés sous pression dans des tuyaux d 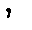 alimentation.

Selon une forme de réalisation, l 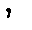 extrudeuse comporte au moins deux compartiments d 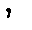 extrusion disposés en série, 9 et 10, dans lesquels sont conduites en parallèle les pâtes 20 et 20 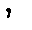 , délivrées sous pression par les tuyaux d 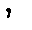 alimentation, 11 et 12 provenant de moyens de compression. Chaque compartiment comporte une sortie, respectivement 13 et 14, qui communique successivement à un même boîtier de confinement 15. Ce boîtier de confinement possède une épaisseur qui augmente à chaque sortie de compartiment pour intégrer une couche, C1 et C2, de pâte de façon à former une bande B de pâte multicouche. Le boîtier 15 possède un fond plat 16 dans le plan duquel une découpe 17 de forme allongée est balayée, extérieurement au boîtier, par des éléments tranchant 18 en appui élastique. Les éléments tranchants (18) appartiennent à un support cylindrique 19 entraîné en rotation.

Application à la préparation de succédanés de poissons jeunes.

## Description

La présente invention se rapporte au domaine de la préparation de produits alimentaires imitant par leur aspect, leur odeur et leur goût, les produits naturels. Plus particulièrement, la présente invention vise à obtenir une imitation de poissons jeunes tels que les alevins, par exemple des alevins d 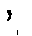 orphie, ou les civelles.

Il est un fait que la capture de jeunes poissons est actuellement en voie de diminution, et que cette pêche risque d 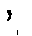 être strictement limitée afin de préserver le maintien des espèces. Il en est ainsi de la pêche de certains jeunes poissons dont la consommation est prisée, par exemple les alevins d'orphie ou les civelles. Parallèlement, le coût pour le consommateur, déjà particulièrement élevé, deviendra prohibitif.

Pour pallier à ce problème, il existe des produits de remplacement, à base de surimi et/ou d 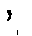 extraits de poissons triturés, additionnés d'ingrédients adaptés (par exemple amidon, sel, sucre, extraits d'arôme, glutamates, colorants,...). Cependant, ces produits restent très éloignés des poissons qu 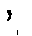 ils cherchent à imiter, notamment leur aspect et leur conformation restent très éloignés des caractéristiques physiques des alevins naturels.

L 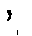 invention vise à obtenir des produits alimentaires aussi proches que possible des alevins naturels dans tous les domaines, de sorte que la confusion entre les deux types de produit soit quasiment totale.

Pour atteindre cet objectif, l 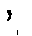 invention est basée sur la formation d 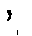 une bande multicouche par extrusion conjointe à partir de plusieurs pâtes, et sur un découpage "en souplesse" de cette bande.

Plus précisément, l 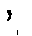 invention a pour objet un procédé de préparation de succédané de poissons jeunes à base de surimi et/ou de chair de poisson, comportant une étape de malaxage de cette base avec des ingrédients pris au moins parmi l 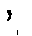 amidon, l 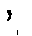 albumine, l 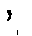 eau, l 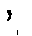 huile, les extraits d 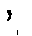 arôme, le sucre, le sel, les glutamates et les colorants, caractérisé en ce que cette étape est répétée pour obtenir au moins deux pâtes de couleur et/ou de consistance différentes par choix des ingrédients additionnels et de leurs proportions, en ce que cette première étape répétée est suivie d 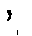 une étape de compactage des pâtes pour former une bande à couche multiple, chaque couche étant constituée d'une pâte, le compactage étant obtenu par compression des pâtes, et d 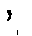 une étape de découpage répété de ladite bande par balayage tranchant en appui élastique.

Selon une forme de réalisation préférée, le procédé mis en oeuvre sur une chaîne de production par des moyens adaptés, est complété par une étape de précuisson dans une eau salée et chauffée à haute température, par exemple à environ 80° C, suivie d 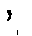 une étape d'égouttage, puis de séchage dans une atmosphère d 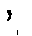 air chaud et brassé, et d'une étape de conditionnement.

L 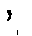 invention concerne également une extrudeuse qui permet de réaliser des éléments de forme allongée semblable à des alevins, à partir de pâtes à base de surimi et/ou de chair de poisson amenés sous pression, par exemple sous pression acqueuse dans des tuyaux d 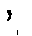 alimentation.

Une telle machine, appelée ci-après extrudeuse découpeuse, comporte essentiellement au moins deux compartiments d 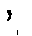 extrusion disposés en série, dans lesquels sont conduites en parallèle les pâtes délivrées sous pression par des tuyaux d 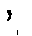 alimentation provenant de moyens de compression, pour former des couches de pâte.

Chaque compartiment comporte une sortie qui communique successivement à un même boîtier de confinement. Ce boîtier de confinement possède une épaisseur qui augmente à chaque sortie de compartiment, pour intégrer une nouvelle couche de pâte issue de ce compartiment de façon à former une seule bande de pâte multicouche.

Le boîtier possède un fond dans le plan duquel une découpe de forme allongée est balayée, extérieurement au boîtier, par au moins un élément tranchant. Cet élément tranchant vient en appui élastique contre le plan de la découpe pour séparer la bande multicouche en éléments allongés. La forme de la découpe est adaptée pour que l'élément allongé ait la forme désirée, présentant les caractéristiques du modèle de poisson à imiter, par exemple un rostre ou un ventre arrondi.

Selon une forme de réalisation particulière, l'extrudeuse découpeuse comporte un support cylindrique entraîné en rotation autour de son axe, sur lequel sont disposés de multiples éléments coupants régulièrement répartis parallèlement à l 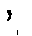 axe de ce support. La distance entre l 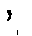 axe de rotation du support et le plan de découpe est ajustée pour que les éléments coupants viennent périodiquement, lors de la rotation du support, en appui élastique contre la découpe. La vitesse de rotation du support et la vitesse d'extrusion sont proportionnellement adaptées pour que la bande découpée ait en coupe une section de forme circulaire ou légèrement aplatie, suivant le modèle de référence.

Selon un exemple de réalisation, l'extrudeuse découpeuse comporte deux compartiments d 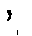 extrusion pour fournir deux couches correspondant par exemple au ventre et au dos de l 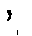 alevin, les pâtes étant respectivement de couleur gris clair et gris foncé par addition d 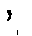 un colorant adapté, par exemple de l 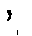 encre de seiche.

Selon un autre exemple de réalisation, l'extrudeuse découpeuse comporte également un compartiment d'extrusion particulier interne, qui pénètre dans les autres compartiments et passe à travers les sorties de ces compartiments, jusqu'à la sortie du dernier compartiment jusqu'au plan de découpe. Une pâte de couleur différente est introduite sous pression dans le compartiment interne. Ce compartiment interne permet d'intégrer une couche en forme de rondelle dans la bande multicouche, et donc dans chaque élément découpé. Cette rondelle rend compte de l'oeil de l'alevin.

Le boîtier de confinement peut être formé successivement de chambres cloisonnées, chaque chambre reliant une sortie de compartiment au plan de découpe. Ce boîtier peut également ne comporter qu'une chambre unique, sans cloisonnement.

D 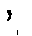 autres caractéristiques et avantages de l 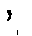 invention apparaîtront à la lecture de la description détaillée qui suit, relative à des exemples de réalisation. Ces exemples, donnés à titre non limitatif, sont exposés en référence aux figures annexées qui représentent, respectivement :
- la figure 1, un exemple de mise en oeuvre du procédé selon l 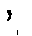 invention sur une chaîne de production;
- la figure 2, une vue partiellement arrachée d 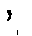 un exemple d'extrudeuse découpeuse selon l'invention pouvant être utilisée dans le procédé selon l 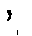 invention, et
- la figure 3, le fond de découpe vu de l'extérieur de l'extrudeuse découpeuse, dans une variante de réalisation.

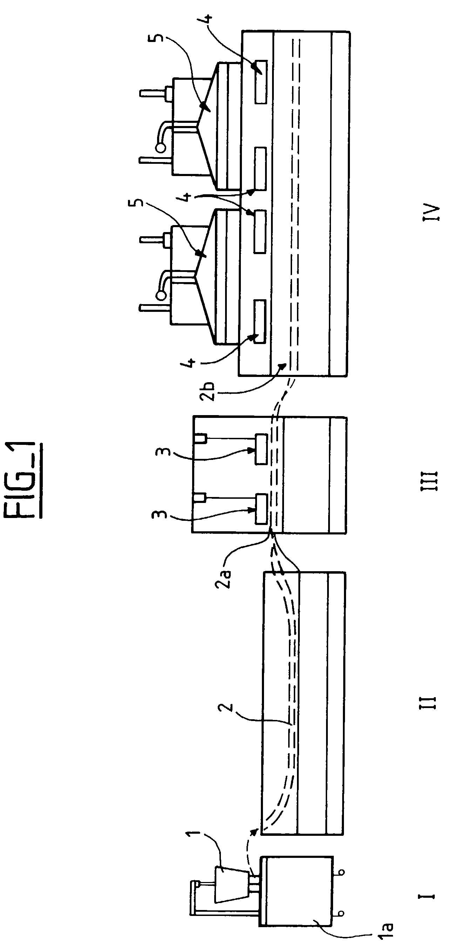

Sur la figure 1, les principales étapes du procédé de préparation selon l'invention sont illustrées à travers leur mise en oeuvre dans une chaîne de production. L'installation représentée comporte les principaux postes de travail suivants :
- I : formation des succédanés d'alevins ;
- II : précuisson des produits formés ;
- III : égouttage des produits précuits ;
- IV : séchage des produits égouttés.

L'étape de formation I est précédée d'une étape de malaxage d'une base de surimi et/ou de chair de poisson. Dans cette étape de malaxage, il est prévu l'obtention de deux pâtes en mélangeant intimement cette base avec des ingrédients pris dans la liste non exhaustive suivante : amidon, albumine, eau, huile, extraits d'arôme, sucre, sel, glutamate et colorants. Les ingrédients et leurs proportions sont choisies pour obtenir deux pâtes de couleur et de consistance aussi proches que possible de l'alevin que l'on cherche à imiter. Dans l'exemple de réalisation illustré, deux pâtes sont préparées dans deux malaxeurs, à partir de blocs de surimi décongelés, la température restant, à tous les stades de la fabrication des pâtes, entre - 5 et + 8°C. Deux couleurs de pâtes sont obtenues, l'une gris foncé destinée à la fabrication du dos de l'alevin, l'autre gris clair destiné à la fabrication de son ventre.

La composition de ces deux pâtes différent, non seulement pour donner une couleur différente mais également une consistance différente, la pâte gris foncé étant plus ferme et plus élastique que la pâte gris clair. La différence de couleur est obtenue par l'utilisation d'un colorant différent ou d'un même colorant en proportions différentes dans les deux pâtes, et la différente de consistance est obtenue par variation des proportions des différents ingrédients, notamment de l'amidon, de l'albumine et des glutamates. Ces pâtes peuvent être réalisées à partir des exemples de préparations suivantes :

### Première préparation :

| | |
|---|---|
| Chairs de poissons blancs | 55 % |
| Eau | 23 % |
| Extrait d'algues | 3,5 % |
| Fécule de pommes de terre | 8 % |
| Albumine en poudre | 6 % |
| Sel | 1,2 % |
| Sucre | 1,8 % |
| Colorants naturels | 1,5 % |

### Deuxième préparation

| | |
|---|---|
| Merlan bleu (Alaska Pollock) | 57 % |
| Eau | 25 % |
| Extraits d'huîtres | 2,5 % |
| Fécules de petits-pois | 7,5 % |
| Sel | 0,8 % |
| Sucre | 1,2 % |
| Huile végétale | 4 % |
| Colorants naturels | 2 % |

Les pâtes sont ensuite dirigées, sans être mélangées, dans des trémies d'asservissement d'une extrudeuse 1 à entrée multiple surélevée sur un bâti 1a, disposée au poste de formation I. Il est possible de prévoir également une troisième trémie d'entrée de l'extrudeuse pour amener une autre préparation à base d'encre de seiche, afin d'enduire la pâte servant à la fabrication du dos de l'alevin d'un mince filament noir.

L'extrudeuse 1 permet de compacter les différentes pâtes par compression conjointe afin d'obtenir une bande multicouche, la bande formée étant découpée en sortie de l'extrudeuse. Un découpage répété est réalisé par des éléments tranchants et aptes à balayer la sortie de l'extrudeuse en appui élastique contre celle-ci. Une extrudeuse découpeuse, plus particulièrement adaptée à être utilisée dans cette installation, est décrite plus loin.

La bande est ainsi découpée en éléments qui sont éjectés, par la force élastique des éléments tranchants, vers la station de pré-cuisson II. A ce poste, les éléments en forme d'alevin sont acheminés individuellement sur un tapis roulant 2 qui baigne dans une eau chauffée à une température pouvant varier entre 80 et 90°C. L'eau est salée, avec une teneur en sel variant entre 2 et 10%, et la vitesse du tapis 2 est réglée pour que les produits acheminés puissent rester quelques minutes à cette station, par exemple entre une et quatre minutes.

A la station III, les produits précuits sont égouttés par passage sur un tapis roulant grillagé 2a, un brassage d'air à température ambiante étant réalisé au-dessus du tapis, à l'aide de ventilateurs 3.

A la station de séchage IV, les produits égouttés obtenus sont acheminés, toujours sur un tapis roulant 2b, sous des lampes U.V. 4 (diffusant une lumière ultraviolette). L'atmosphère baigne dans un air chauffé à l'aide de hottes ventilées 5 disposées au-dessus des lampes U.V. 4.

A la sortie de cette chaîne de production, les succédanés d'alevins sont conditionnés dans des barquettes préformées, après pesée, pour être conservés et vendus, soit en produits frais soit en produits surgelés.

L'invention propose également une machine extrudeuse découpeuse permettant notamment de donner une empreinte à la pâte ou aux pâtes habituellement obtenues à partir de mélanges à base de surimi, empreintes qui donnent au produit un aspect aussi proche que possible de l'aspect du poisson qu'il cherche à imiter (coloration selon des proportions réalistes, ensemble formant unité inséparable, zone imitant l 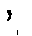 oeil). Une telle machine convient particulièrement, mais non exclusivement, au procédé de préparation et à la chaîne de production qui viennent d'être décrits.

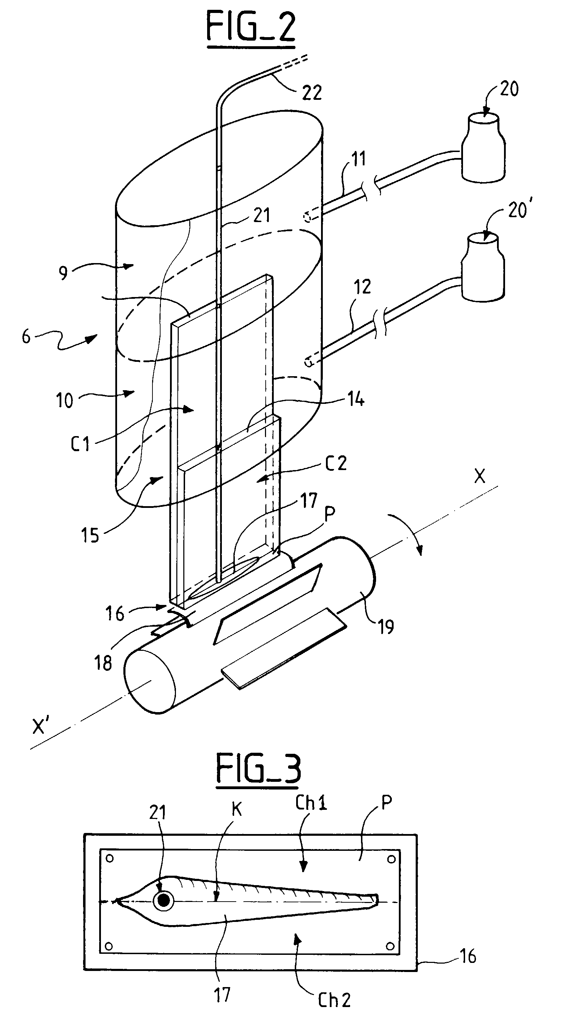

La figure 2 illustre schématiquement une vue partiellement arrachée d'un exemple d'extrudeuse découpeuse selon l'invention. L'extrudeuse découpeuse 6 se compose de deux trémies d'asservissement 7, 8, de deux compartiments d'extrusion, respectivement 9 et 10, disposés l'un à la suite à de l'autre, de tuyaux d'alimentation, respectivement 11 et 12, entre les trémies et les compartiments, de sorties de compartiment, respectivement 13 et 14, d'un boîtier de confinement terminé par un fond plat de découpe 16, d'une découpe 17 disposée dans le fond plat 16, d 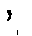 éléments tranchants 18, avantageusement solidaires d 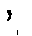 un support cylindrique 19 entraîné en rotation.

En fonctionnement, les pâtes 20 et 20' sont conduites en parallèle des trémies d'alimentation 7 et 8 aux compartiments d'extrusion 9 et 10 dans les tuyaux d'alimentation 11 et 12, sous une pression acqueuse exercée par des moyens de compression (non représentés). Les sorties 13 et 14 des compartiments 9 et 10 sont de forme rectangulaire afin de fournir successivement une couche de pâte, C1 puis C2, au boîtier de confinement 15, avec lequel elle communique par leur sortie pour former une bande B. Le boîtier 15 possède ainsi une épaisseur qui augmente à chaque sortie de compartiment, pour intégrer une nouvelle couche de pâte.

Dans cet exemple de réalisation, les couches de pâte ne sont pas en contact dans le boîtier et restent cloisonnées jusqu'au fond plat de découpe 16 dans des chambres séparées Ch1 et Ch2. La bande B est ainsi formée de couches multiples mais séparées. Dans ce fond de découpe, une pièce P est fixée. Dans la pièce P, est aménagée la découpe 17. La position de la pièce P est réglée de sorte que les pâtes 20 et 20' provenant du boîtier de confinement 15 puissent traverser la découpe 17 selon des proportions prédéterminées, par exemple selon une épaisseur sensiblement égale.

Les éléments tranchants 18 viennent en appui élastique contre le plan de la découpe 17, c'est-à-dire que ces éléments coupants viennent contre le plan de découpe en fléchissant légèrement. Pour ce faire, le support cylindrique 19 des éléments coupants 18 est entraîné en rotation autour de son axe X'X par des moyens motorisés (non représentés). Les éléments tranchants 18 sont régulièrement répartis sur le cylindre 19 et sont fixés de manière amovible pour pouvoir être remplacés. La distance entre l'axe de rotation X'X du support 19 et le plan de découpe 16 est ajustée pour que les éléments coupants 18 viennent successivement en appui élastique contre la découpe 17 lors de la rotation du support 19. Cette disposition permet d'une part d'obtenir un découpage régulier de la bande B, évitant l'apparition d'"arêtes" le long de l'élément découpé, et d'autre part permet d'éjecter les éléments successivement formes.

Il est avantageux d 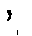 adapter la vitesse de rotation du support et la vitesse d'extrusion pilotée par les moyens de compression en fonction du débit requis au conditionnement, pour que les éléments découpés provenant de la bande de pâte multicouches ait en coupe une forme circulaire ou légèrement aplatie.

Selon une variante de réalisation, l'extrudeuse découpeuse peut comporter un compartiment d'extrusion interne sensiblement cylindrique 21, qui passe dans les autres compartiments 9 et 10, et les sorties 13 et 14 de ces compartiments, jusqu'à la dernière sortie de compartiment ou jusqu'au plan de découpe 16 comme représenté. Une pâte de couleur différente est introduite sous pression acqueuse dans le compartiment interne 21, obtenue à partir de l'encre de seiche. Ce compartiment interne présente une section circulaire adaptée pour intégrer à la bande de pâte multicouche une couche en forme de filament entre les deux couches. Ce filament donne, lors de la découpe par l 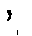 élément tranchant 18, une trace en forme de disque, figurant l'empreinte de l'oeil.

La figure 3 représente, vu de l'extérieur, le fond de la découpe 16 dans cette variante de réalisation. Sur cette vue, il apparaît la pièce P avec sa découpe 17, le cloisonnement K entre les chambres Ch1 et Ch2 du boîtier de confinement, et l'extrémité circulaire du compartiment 21.

L'invention n'est pas limitée aux exemples de réalisation décrits et représentés. Il est par exemple possible d'ajouter un troisième compartiment en série, contenant une préparation à base d'encre de seiche, dont la sortie serait d'épaisseur inférieure aux sorties des deux compartiments en sortie décrits précédemment. Cette troisième couche est disposée sur la couche gris foncé et permet d'enduire le dos du succédané d'alevin d'un léger filament noir.

Par ailleurs, le boîtier de confinement peut être conçu d'une seule pièce, sans cloisonnement, de sorte que chaque couche successive vienne en contact avec la bande formée des pâtes déjà disposées en couches. Par ailleurs, l'homme du métier peut prévoir des moyens de fixation de la pièce de découpe P amovibles, de façon à disposer d'autres pièces de découpe dans lesquelles d'autres formes de découpe sont prévues. Il est ainsi possible de modifier la conformation des produits obtenus de manière à imiter la forme d'autres poissons. D'autre part, les éléments tranchants sont des moyens connus de l'homme du métier, par exemple des lames de plastique d'élasticité adaptée.

## Revendications

1. Procédé de préparation de succédané de poissons jeunes à base de surimi et/ou de chair de poisson, comportant une étape de malaxage de cette base avec des ingrédients pris au moins parmi l 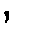 amidon, l 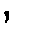 albumine, l 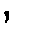 eau, l 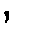 huile, les extraits d 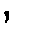 arôme, le sucre, le sel, les glutamates et les colorants, caractérisé en ce que cette étape est répétée pour obtenir au moins deux pâtes (20, 20') de couleur et/ou de consistance différentes par choix entre les ingrédients additionnels et de leurs proportions, en ce que cette première étape répétée est suivie d 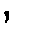 une étape de compactage des pâtes pour former une bande (B) à couche multiple, chaque couche (C1, C2) étant constituée d'une pâte, le compactage étant obtenu par compression des pâtes (20, 20'), et d 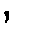 une étape de découpage répété de ladite bande par balayage tranchant en appui élastique.

2. Procédé selon la revendication 1, caractérisé en ce qu'il est complété par une étape de précuisson dans une eau salée et chauffée à haute température, suivie d 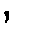 une étape d'égouttage, puis de séchage dans une atmosphère d 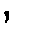 air chaud et brassé, et d'une étape de conditionnement.

3. Procédé selon l 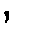 une des revendications précédentes, caractérisé en ce que l 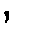 étape de malaxage est effectuée à partir des ingrédients suivants, donnés en proportion décroissante : chairs de poissons blancs, eau, extrait d'algues, fécule de pommes de terre, albumine en poudre, sucre, colorants, sel.

4. Procédé selon l 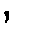 une des revendications 1 ou 2, caractérisé en ce que l 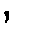 étape de malaxage est effectuée à partir des ingrédients suivants, donnés en proportion décroissante :merlan bleu, eau, fécules de petits-pois, huile végétale, extraits d'huîtres, colorants, sucre, sel.

5. Extrudeuse découpeuse pour réaliser des éléments de forme allongée semblable à des alevins, à partir de pâtes à base de surimi et/ou de chair de poisson amenés sous pression dans des tuyaux d 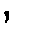 alimentation, caractérisée en ce qu'elle comporte au moins deux compartiments d 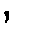 extrusion disposés en série (9, 10), dans lesquels sont conduites en paralléle les pâtes (20, 20 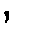 ) délivrées sous pression par les tuyaux d 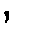 alimentation (11,12) provenant de moyens de compression, en ce que chaque compartiment (9, 10) comporte une sortie (13, 14) qui communique successivement à un même boîtier de confinement (15), ce boîtier de confinement possède une épaisseur qui augmente à chaque sortie de compartiment pour intégrer une couche (C1, C2) de pâte issue de ce compartiment de façon à former une bande (B) de pâte multicouche, en ce que le boîtier (15) possède un fond plat (16) dans le plan duquel une découpe (17) de forme allongée est balayée, extérieurement au boîtier, par au moins un élément tranchant (18), et en ce que cet élément tranchant vient en appui élastique contre le plan du fond de découpe (16) pour séparer la bande multicouche (B) en éléments allongés.

6. Extrudeuse découpeuse selon la revendication 5, caractérisée en ce qu'elle comporte un support cylindrique (19) entraîné en rotation autour de son axe (X 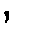 X), sur lequel sont disposés de multiples éléments coupants (18) régulièrement répartis parallèlement à l 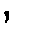 axe de ce support, et en ce que la distance entre l 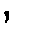 axe de rotation (X 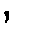 X) du support et le fond de découpe (16) est ajustée pour que les éléments coupants (18) viennent périodiquement, lors de la rotation du support (19), en appui élastique contre le fond de découpe (16).

7. Extrudeuse découpeuse selon la revendication 6, caractérisée en ce que la vitesse de rotation du support (19) et la vitesse d'extrusion pilotée par les moyens de compression sont adaptées en fonction du débit requis au conditionnement, pour que les éléments découpés provenant de la bande de pâte multicouche (B) ait en coupe une forme soit circulaire soit légèrement aplatie.

8. Extrudeuse découpeuse selon l'une quelconque des revendications 5 à 7, caractérisée en ce qu'elle comporte également un compartiment d'extrusion interne sensiblement cylindrique (21), qui pénètre dans les autres compartiments (9, 10) disposés en série et passe à travers les sorties (13, 14) de ces compartiments, jusqu'à la sortie du dernier compartiment ou jusqu'au plan de découpe (16), une pâte de couleur différente de celles des autres pâtes est introduite sous pression dans le compartiment interne (21).

9. Extrudeuse découpeuse selon l'une quelconque des revendications 5 à 8, caractérisée en ce qu'elle comporte dans le fond de découpe (16), une pièce (P) fixée de manière amovible et dans laquelle est ménagée la découpe (17), et en ce que la position de la pièce (P) est réglée de sorte que les pâtes (20, 20') provenant du boîtier de confinement (15) puissent traverser la découpe (17) dans des proportions prédéterminées

10. Extrudeuse découpeuse selon l'une quelconque des revendications 5 à 9, caractérisée en ce que boîtier de confinement (15) peut être formé successivement soit de chambres cloisonnées (Ch1, Ch2), chaque chambre reliant une sortie (13, 14) de compartiment au plan de découpe (16), soit de chambres non cloisonnées définissant une chambre unique.
